# DEMANDE DE BREVET EUROPEEN

(11) **EP 1 205 849 A1**
(43) Date de publication de la demande: **15.05.2002**
(21) Numéro de dépôt: 01204288.3
(22) Date de dépôt: 08.11.2001
(51) Int. Cl.: G06F 13/38

(54) **Dispositif d'adaptation programmable pour protocoles de communication**

(30) Priorité: 14.11.2000 FR 0014755
(71) Demandeur: AEG SCHNEIDER AUTOMATION, 06560 Valbonne (FR)
(72) Inventeur: Hardy, Christian, Ing., 83340 Le Thoronet (FR); Puig, Frédéric, Ing., 06560 Valbonne (FR); Barthelemy, Philippe, Ing., 06410 Biot (FR)

(57) **Abrégé**

La présente invention concerne un dispositif d'adaptation programmable entre un protocole de communication amont supporté par un équipement amont (30) et au moins un protocole de communication aval supporté par un équipement d'automatisme aval (40). Le dispositif comprend un adaptateur (20) doté d'une première mémoire (25) contenant un programme de conversion (15) entre le protocole amont et un protocole aval, téléchargeable à partir de l'équipement amont (30) et exécutable par l'adaptateur (20), et doté d'une seconde mémoire (26) non volatile contenant un programme pilote résident (16) permettant d'initialiser la communication avec l'équipement amont (30). Une zone mémoire (17) sert de tampon intermédiaire pour gérer les asynchronismes entre protocoles. Le câble de raccordement aval (14) permet d'identifier un identificateur complet ou partiel du protocole aval.

## Description

La présente invention concerne un dispositif d'adaptation programmable capable de faire communiquer entre eux deux équipements intégrant des protocoles de communication différents. Elle concerne également un procédé pour configurer automatiquement un tel dispositif d'adaptation avec un protocole donné.

D'une façon générale, la communication série entre un équipement informatique, tel que par exemple un ordinateur individuel de type PC (Personal Computer) ou un appareil de type PDA (Personal Digital Assistant), et un autre équipement, tel qu'un équipement d'automatisme, requiert que les deux équipements puissent comprendre un même protocole de communication. Sous le terme équipement d'automatisme, on regroupera ci-après un automate programmable, une commande numérique, un dispositif de régulation, une station de contrôle/commande, un terminal de dialogue homme-machine, un variateur de vitesse, un capteur/actionneur intelligent ou tout autre équipement lié à un automatisme possédant une unité de traitement et capable de communiquer avec un équipement extérieur.

Or, il existe dans les équipements d'automatisme une grande variété de protocoles de communication différents et spécifiques. Les pilotes de ces protocoles de communication ont souvent été développés avec l'hypothèse de pouvoir piloter directement une interface matérielle UART (Universal Asynchronous Receiver and Transmitter) d'un équipement informatique. Cependant, l'évolution rapide des équipements informatiques entraîne des modifications importantes des pilotes de périphériques, des UART, des systèmes d'exploitation de ces équipements ce qui rend difficile leur compatibilité avec un parc important d'équipements d'automatisme existants intégrant des protocoles de communication divers. De plus, les équipements informatiques possèdent de moins en moins de réels ports de communication série COM, au profit de bus de périphériques standardisé tel que USB (Universal Serial Bus).

Dans le cas où un pilote est capable de contrôler directement une UART, et pour une communication dite "half-duplex", pour laquelle la ligne de communication possède physiquement deux états permettant pour l'un l'émission et pour l'autre la réception de données, on a généralement fait l'hypothèse que le pilote pourrait commuter la ligne entre émission et réception de façon suffisamment précise après que tous les caractères aient quitté les registres de transmission de l'UART et avant que l'équipement d'automatisme ne réponde. Cette hypothèse, vraie pour des équipements pilotant directement une UART, est fausse pour une machine complexe, multitâches, architecturée en couches tant matérielles que logicielles, telle qu'un ordinateur personnel de type PC.

Dans d'autres cas, le protocole de niveau transport (Data Link) est tel qu'un temps intercaractères maximal doit être respecté afin d'identifier une transmission correcte. Ce temps intercaractères est pour des raisons de performances du même ordre de grandeur que le temps de transmission d'un caractère (par exemple à 38400 bauds : 1/38400*11*1.5 = 430 microsecondes). Dans ces cas de figure, la maîtrise de temps d'attente (variant de 100 microsecondes à 1 milliseconde) est difficile car à la fois trop grande pour être gérée par scrutation sous masquage d'interruptions (gaspillage de cycles de l'unité de traitement CPU), et trop petite par rapport à l'instabilité sur le temps (jitter) induite par le système (multitâche, échanges de blocs sur le bus vidéo, gestion de l'énergie).

Des contraintes de type "délai minimal" et de type "délai maximal" doivent donc finalement être implémentées. Les contraintes de type "délai minimal" imposent de larges marges de sécurité, donc une perte de performance. Pour les contraintes de type "délai maximal", il est nécessaire de recourir à des artifices incompatibles avec les règles de l'art du développement : attente en boucle, verrouillage des interruptions, court-circuit des couches logicielles, ajout de composants électroniques propriétaires, etc., au détriment de la portabilité et de la performance générale de la machine communicante, et sans garantie de résultat.

Le document US 5870626 décrit un dispositif de liaison informatique entre plusieurs équipements, avec des protocoles de communications hétérogènes. Dans ce dispositif, une interface est reliée d'une part à un ou plusieurs ordinateurs amont et d'autre part à un ou plusieurs appareils aval. Ces liaisons sont effectuées grâce à des câbles de liaison qui doivent être munis de clefs d'identification pour permettre l'identification du protocole de communication de l'appareil ou ordinateur correspondant. L'interface comporte un processeur central disposant d'une bibliothèque de programmes de conversion de protocoles associés aux clefs d'identification. Néanmoins les clefs d'identification étant propres aux câbles de liaison, ce dispositif impose l'utilisation de câbles spécifiques et de ce fait, il n'est pas adapté pour suivre les évolutions logicielles régulières des protocoles de communication. De plus, une telle solution peut imposer des moyens informatiques importants au niveau de l'interface pour gérer et mémoriser les différentes combinaisons possibles entre protocoles amont et aval.

Un premier but de la présente invention est de proposer une solution simple permettant d'éviter les problèmes de fiabilité rencontrés dans les communications entre un équipement informatique et un équipement d'automatisme communiquant avec des protocoles de communication différents. Un autre but est d'une part de s'adapter rapidement aux évolutions logicielles des protocoles de communication et d'autre part d'éviter les surcoûts importants engendrés par les mises à jour des pilotes des protocoles de communication pour qu'ils s'adaptent aux incessantes évolutions des équipements informatiques. Cette amélioration s'effectue en déportant les traitements critiques vis-à-vis du temps dans un adaptateur programmable, tout en maintenant dans l'équipement informatique amont des pilotes de périphériques proches des pilotes actuels. L'invention a également pour but d'optimiser les temps d'attente et de commutation dans une communication half-duplex, permettant d'augmenter la plage des vitesses de communication exploitables et de fournir une solution simple et peu coûteuse notamment au niveau de la gestion de protocole amont.

D'autre part, en interposant un adaptateur programmable entre les réseaux amont et aval, l'invention permet de réduire le problème lié à la multiplicité des câbles aval, qui, pour le même protocole, sont en général différents selon l'équipement aval auquel ils donnent accès. La portion des différents câbles aval peut en effet être réduite à une faible longueur (de l'ordre de la dizaine de centimètres), pour un câble support amont plus long (de l'ordre de plusieurs mètres).

Pour cela, l'invention décrit un dispositif d'adaptation programmable entre un protocole de communication amont intégré dans un équipement amont tel qu'un équipement informatique, et au moins un protocole de communication aval intégré dans un équipement aval tel qu'un équipement d'automatisme. Le dispositif comprend un adaptateur muni d'une unité de traitement capable d'exécuter des instructions de programme, d'une interface amont pouvant se connecter avec une interface amont de l'équipement amont et d'une interface aval pouvant se connecter avec une interface aval de l'équipement aval. Le dispositif se caractérise par le fait que l'adaptateur comprend une première mémoire, qui peut être volatile, contenant un programme de conversion entre le protocole amont et un protocole aval, téléchargeable à partir de l'équipement amont et exécutable par l'unité de traitement de l'adaptateur, et par le fait que l'adaptateur comprend une seconde mémoire non volatile contenant un programme pilote résident, exécutable par l'unité de traitement, permettant d'initialiser la communication avec l'équipement amont selon le protocole amont et de télécharger le programme de conversion dans la première mémoire.

Selon une caractéristique, le dispositif d'adaptation comprend un câble de raccordement aval entre l'interface aval de l'adaptateur et l'interface aval de l'équipement aval, ce câble de raccordement aval comportant des moyens de reconnaissance, détectables quand le câble est connecté à l'interface aval de l'adaptateur, permettant à l'unité de traitement de l'adaptateur de déterminer un identificateur complet ou partiel du protocole aval grâce au programme pilote résident dans la deuxième mémoire de l'adaptateur. L'équipement amont comporte une zone de stockage permettant de mémoriser un ou plusieurs programmes de conversion entre le protocole amont et un protocole aval, susceptibles d'être téléchargés dans l'adaptateur en fonction de l'identification du protocole aval.

L'invention décrit également un procédé de configuration d'un dispositif d'adaptation comportant : une étape de reconnaissance dans laquelle l'adaptateur détermine et mémorise un identificateur complet ou partiel de protocole aval à partir des moyens de reconnaissance du câble de raccordement aval connecté à l'adaptateur ; une première étape d'identification dans laquelle l'adaptateur communique avec l'équipement amont selon le protocole de communication amont pour lui transmettre l'identificateur de protocole aval ; une première étape de téléchargement dans laquelle l'équipement amont télécharge dans l'adaptateur un premier programme de conversion entre protocole amont et protocole aval, correspondant à l'identificateur du protocole aval transmis.

Si l'identificateur transmis à l'équipement amont durant la première étape d'identification est un identificateur partiel, le procédé comporte les étapes complémentaires suivantes : une étape d'apprentissage dans laquelle l'adaptateur communique avec l'équipement aval à l'aide du premier programme de conversion téléchargé durant la première étape de téléchargement, afin de définir et mémoriser un identificateur complet du protocole aval ; une seconde étape d'identification dans laquelle l'adaptateur communique avec l'équipement amont pour lui transmettre cet identificateur complet ; une seconde étape de téléchargement dans laquelle l'équipement amont télécharge dans l'adaptateur un second programme de conversion entre protocole amont et protocole aval, correspondant à l'identificateur complet du protocole aval.

Grâce à ce dispositif d'adaptation et à son procédé de configuration, il sera possible de télécharger automatiquement un protocole donné dans l'adaptateur de manière à pouvoir faire communiquer deux équipements intégrant des protocoles de communication différents de façon transparente ou "plug and play" pour un utilisateur. De plus, avec un seul adaptateur programmable, il sera désormais possible de réaliser une conversion entre un protocole amont et une pluralité de protocoles aval, à partir des programmes de conversion mémorisés dans l'équipement amont et téléchargeables dans l'adaptateur.

D'autres caractéristiques et avantages vont apparaître dans la description détaillée qui suit en se référant à un mode de réalisation donné à titre d'exemple et représenté par les dessins annexés sur lesquels :
- la figure 1 représente l'architecture du dispositif d'adaptation programmable selon l'invention,
- la figure 2 schématise les étapes du procédé de configuration lié au dispositif d'adaptation,
- les figures 3 et 4 illustrent un exemple de communication respectivement sans et avec le dispositif d'adaptation.

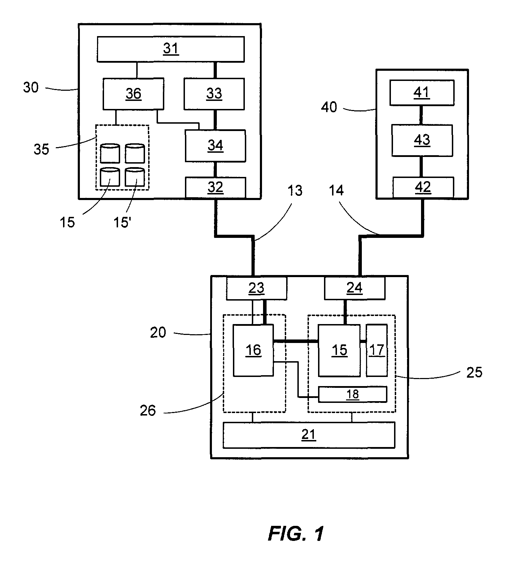

En référence à la figure 1, on souhaite faire communiquer un équipement amont 30 avec un équipement aval 40 au travers d'un adaptateur externe 20. L'adaptateur 20 est contenu dans un boîtier d'adaptation et comporte une interface amont 23 et une interface aval 24. L'équipement amont 30, qui est par exemple un équipement informatique tel que défini précédemment, comporte une interface amont 32 pour communiquer sur un réseau de communication amont avec l'interface amont 23 de l'adaptateur 20 selon un protocole de communication amont. Le réseau de communication amont utilise un support de communication 13, qui peut être filaire ou non. L'équipement aval 40, qui est préférentiellement un équipement d'automatisme tel que défini précédemment, comporte une interface aval 42 pour communiquer sur un câble de raccordement 14 avec l'interface aval 24 de l'adaptateur 20 selon un protocole de communication aval. L'équipement aval 40 comporte une unité de traitement 41 et un pilote de protocole aval 43 capable d'émettre et de recevoir des messages selon le protocole aval.

Le protocole de communication amont est par exemple le protocole USB, très répandu dans des équipements amont de type ordinateur PC, le protocole BLUETOOTH (marque déposée de Ericsson) pour lequel le support 13 de communication serait des ondes radio (protocole décrit par le groupe de travail IEEE 802.15), le protocole conforme aux recommandations IEEE 1394-1995 (comme par exemple le protocole FIREWIRE marque déposée de Apple Computer) ou autres. Si cela est possible, comme dans le cas du protocole USB, le support de communication 13 achemine également l'alimentation électrique pour l'adaptateur 20, à partir de l'interface amont 32 USB de l'équipement amont 30.

Le protocole de communication aval appartient préférentiellement aux protocoles qui sont fréquemment utilisés dans le monde des automatismes. Par exemple le protocole de communication aval est un des protocoles Modbus, Modbus+, Uni-telway ou tout protocole dont la couche physique répond à un des standards recommandés RS-232, RS-485, RS-422 ou boucle de courant. De même, le protocole de communication aval peut être un protocole basé sur les standards Ethernet et TCP/IP comme par exemple le protocole MODBUS TCP. Le protocole de communication aval peut aussi être sélectionné parmi un groupe constitué des protocoles FIP (marque déposée de WorIdFIP Europe), CAN, CANopen, Interbus-S (marque déposée de Phoenix Contact), DeviceNet, ou autres. Il peut enfin être un protocole de messagerie propre à l'automatisme basé sur USB.

L'adaptateur 20 comporte une unité de traitement 21 capable d'exécuter des instructions de programme, reliée à une première mémoire 25, volatile ou non, et à une seconde mémoire non-volatile 26. La seconde mémoire 26 contient un petit programme pilote résident 16, exécutable par l'unité de traitement 21. Le programme pilote résident 16 sert notamment à initialiser la communication entre l'adaptateur 20 et l'équipement amont 30 selon un protocole de communication amont déterminé, afin que l'adaptateur 20 puisse être exploitable comme périphérique, à télécharger un programme de conversion 15,15' dans la première mémoire 25 et à assurer un minimum de dialogue permettant à l'équipement amont 30 de connaître l'état de l'adaptateur 20. Un adaptateur 20 donné ne peut donc communiquer avec l'équipement amont 30 que selon le protocole amont mémorisé dans le programme pilote résident 16. Eventuellement, le programme pilote résident 16 offre également des primitives de communication, comme une librairie d'accès au réseau amont, pour le programme de conversion 15, afin de le libérer des détails d'implémentation du réseau amont, tels que les composants électroniques choisis. L'initialisation de l'adaptateur 20 est donc simple à réaliser et ne nécessite pas de reconnaissance de protocole particulière pour communiquer avec l'équipement amont 30.

L'équipement amont 30 comporte une unité de traitement 31 capable d'exécuter des instructions de programme et une zone de stockage 35 permettant de mémoriser un ou plusieurs programme de conversion 15,15' entre un protocole amont et un ou plusieurs protocoles aval. Cette zone de stockage 35 est gérée par un programme de contrôle 36 qui est capable de télécharger un programme de conversion 15 dans la première mémoire 25 de l'adaptateur. On peut aussi envisager de façon équivalente que le programme de contrôle 36 aille chercher un programme de conversion 15 non pas dans la zone de stockage 35 de l'équipement amont 30 mais dans une zone mémoire distante accessible depuis l'équipement amont 30 par un réseau local ou global, tel que l'Internet.

Le programme de conversion ainsi téléchargé pourra être exécuté par l'unité de traitement 21 de l'adaptateur 20. Chaque programme de conversion 15,15' est chargé de recevoir les messages émis selon le protocole amont par l'équipement amont à destination d'un équipement aval et de les transmettre à l'équipement aval selon un protocole aval. De même, il est chargé de recevoir les messages émis par un équipement aval selon un protocole aval à destination de l'équipement amont et de les transmettre à l'équipement amont selon le protocole amont.

L'équipement amont 30 comprend au moins un pilote de périphérique 34 et au moins un pilote de protocole aval 33. L'interface amont 32 de l'équipement amont 30 est reliée à un pilote de périphérique 34 lui-même relié à un pilote de protocole aval 33. Le programme de contrôle 36 est un programme avec lequel un utilisateur peut interagir, par exemple au moyen d'une interface de dialogue, de façon à lui permettre de contrôler l'état du pilote de périphérique 34, de le configurer, ou de le désinstaller. Pour charger le programme de conversion 15 dans la première mémoire 25 de l'adaptateur 20, le programme de contrôle 36 peut donc être activé par l'utilisateur, mais peut être également lancé automatiquement par le pilote de périphérique 34. En effet, habituellement seul un programme (et non un simple pilote de périphérique) peut avoir accès à un système de fichier permettant de retrouver un programme 15,15' dans une zone de stockage 35.

Le pilote de protocole aval 33 (qui est soit un véritable pilote de périphérique fonctionnant en mode noyau, soit un programme fonctionnant en mode utilisateur) est piloté par un programme application duquel il reçoit des messages à émettre et auquel il transmet des messages reçus. Il utilise un pilote de périphérique 34 parmi plusieurs possibles pour communiquer avec un adaptateur 20. Le pilote de périphérique 34 supporte une interface de service qui est exploitée par le programme de contrôle 36 afin de dialoguer avec l'adaptateur 20 en tant que périphérique sur le réseau amont. Le pilote de périphérique 34 supporte également une interface de communication qui est exploitée par le pilote de protocole aval 33. Dans le cadre de l'invention, cette interface de communication peut être conçue de plusieurs manières en fonction du problème à traiter :
◆ Selon un mode d'implémentation préféré, l'interface de communication est une interface de communication série conforme à la spécification des pilotes de périphériques série. Grâce à cette conformité, le pilote de protocole aval 33 peut s'appuyer sur les couches de communication série proposées par le système d'exploitation de l'équipement amont 30 ; ces couches sont l'équivalent logiciel de l'interface matérielle UART décrite plus haut, elles apportent une portabilité accrue au pilote de protocole aval 33. Ainsi le pilote de protocole aval 33 peut communiquer avec le pilote de périphérique 34 au travers de cette interface de communication série. Dans ce mode d'implémentation préféré, nous pouvons distinguer deux cas de figure :
   - Dans le premier cas, les requêtes et les réponses conformes au protocole aval sont encapsulées et échangées caractère par caractère entre le pilote de protocole aval 33 et le pilote de périphérique 34, comme pour une ligne de communication série. L'encapsulation consiste en des informations supplémentaires (appelées méta informations) portant sur les requêtes (comme par exemple leur longueur ou leur criticité), ce qui permet au pilote de périphérique 34 de choisir un mode de transmission approprié sur le réseau de communication amont, par exemple :
      - Si le pilote de périphérique 34 connaît la taille du message à envoyer et/ou recevoir, il peut attendre de disposer de la totalité du message pour le transmettre sur le réseau amont ou vers le pilote de protocole aval 33.
      - Si le pilote de périphérique 34 connaît la criticité du message à transmettre sur le réseau amont, il peut choisir différents canaux de communication. Typiquement, pour une requête critique et courte comme un ordre d'arrêt, il utilise un canal de communication à bande passante garantie s'il en existe. En coopération avec le programme pilote résident 16, la garantie de bande passante peut être négociée lors de la connexion, celle-ci pouvant être refusée si la bande passante n'est pas disponible. Par contre, pour une requête longue non critique, il utilise en revanche un canal de communication à bande passante non garantie, ce qui permettra de ne pas dégrader la communication de l'équipement amont avec d'autres périphériques.
      - les méta informations peuvent également désigner des variantes du protocole aval, suffisamment proches pour être traitées par les mêmes pilotes de protocole aval 33 et les programmes de conversion 15.
   - le second cas correspond à l'utilisation d'un pilote de protocole aval 33 aussi proche que possible de pilotes existant actuellement. La communication consistant en requêtes et réponses, le pilote 33 émet et reçoit exactement les caractères constituant ces requêtes et réponses. Le pilote de périphérique 34 se borne à transmettre des caractères sans connaître leur sens.
◆ Selon une autre implémentation, l'interface de communication n'est pas conforme à la spécification des pilotes de périphériques série. Elle est propre à l'interaction entre le pilote de périphérique 34 et le pilote de protocole 33.
   Cette implémentation correspond au cas où il est intéressant de disposer d'une solution de périphérie typiquement externe à l'équipement amont, avec un protocole aval industriel nécessitant un coprocesseur de communication tel que WorldFIP, FIP, Interbus-S, DeviceNet, etc. Dans ce cas, l'existence de plusieurs versions du même protocole ou l'existence d'implémentations proches mais distinctes, permet de traiter les différences en gardant le même pilote de périphérique de bas niveau 34 et le même adaptateur, et en substituant des variantes des programmes 15 et 33. A l'extrême, les pilotes 33 et 34 pourraient alors être confondus en une seule entité.
   Cette implémentation correspond également au cas où le protocole aval est un protocole propre à un équipement d'automatisme aval 40, et est basé sur USB.
   L'équipement aval 40 est alors doté d'une interface USB maître et ne peut dialoguer directement avec l'équipement amont 30 qui est lui aussi maître.
   L'adaptateur joue le rôle d'esclave sur les deux réseaux amont et aval et le programme de conversion 15 joue le rôle de pont entre les deux réseaux.

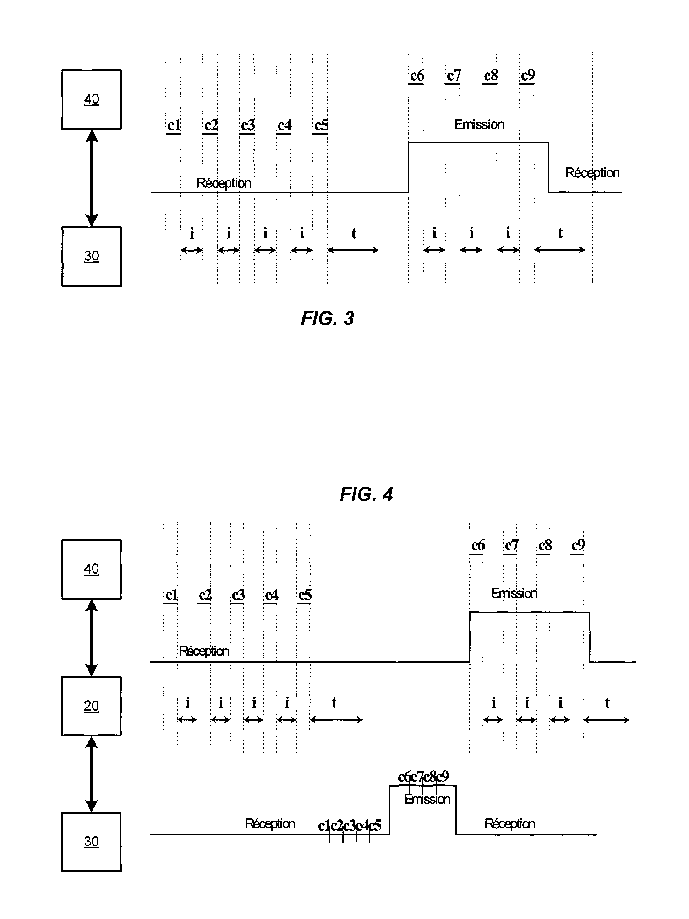

Le programme de conversion 15 utilise une zone mémoire tampon 17, localisée dans la première mémoire 25 de l'adaptateur 20, pour s'adapter aux asynchronismes entre les protocoles amont et aval. Les figures 3 et 4 donnent un exemple d'illustration de l'utilisation d'une mémoire tampon 17. La figure 3 représente une communication entre un équipement amont 30 esclave et un équipement aval 40 quelconque selon un protocole aval s'appuyant sur une liaison série half-duplex. Dans cette figure 3, le dispositif d'adaptation décrit dans l'invention n'est pas utilisé. L'équipement amont 30 reçoit une demande de cinq caractères C1 à C5 à laquelle il devra répondre par un envoi de quatre caractères C6 à C9. Cet échange peut notamment correspondre à une scrutation (polling). L'équipement amont doit être en mesure de détecter le temps maximum intercaractères i ainsi que le temps minimum de silence t entre messages. Comme indiqué au début du présent exposé, ces temps d'attente, typiquement compris entre 100 microsecondes et une milliseconde, constituent une contrainte difficile à gérer par un équipement amont de type PC dans un environnement Windows™.

Dans la figure 4, la communication entre les équipements 30 et 40 se fait au travers d'un adaptateur 20 conforme à l'invention. Les échanges entre l'équipement aval 40 et l'adaptateur 20 se font selon le protocole aval et les échanges entre l'adaptateur 20 et l'équipement amont 30 se font selon le protocole amont. C'est donc l'adaptateur 20 qui reçoit les cinq caractères C1 à C5 du message en provenance de l'équipement aval 40 et qui renverra les quatre caractères de réponse C6 à C9 vers l'équipement aval 40. L'avantage de cette solution est que l'unité de traitement 21 de l'adaptateur 20 est beaucoup plus adaptée pour gérer les temps d'attente i et t. Les caractères C1 à C5 réceptionnés sont stockés au fur et à mesure dans la mémoire tampon 17 de l'adaptateur 20, avant d'être acheminés, une fois le message complet reçu, vers l'équipement amont selon le protocole amont, par exemple le protocole USB, beaucoup mieux géré par l'équipement amont car des moyens spécifiques (couches matérielles plus performantes - vitesse, codage des informations, coprocesseur dédié) peuvent gérer la communication selon le protocole amont. De même, quand l'équipement amont 30 renvoie sa réponse, les caractères C6 à C9 sont stockés dans la mémoire tampon 17, avant d'être acheminés un à un, une fois le message complet reçu, vers l'équipement aval selon le protocole aval. Par ce moyen, on libère l'équipement amont 30 des contraintes liées à la gestion des temps d'attente. L'unité de traitement 21 est donc capable de stocker temporairement dans la zone mémoire tampon 17 l'ensemble d'un message reçu en provenance d'un équipement aval 40 avant de le transmettre vers l'équipement amont 30 et réciproquement de stocker temporairement dans la zone mémoire tampon 17 l'ensemble d'un message reçu en provenance de l'équipement amont 30 avant de le transmettre vers un équipement aval 40.

Pour un fonctionnement transparent, le dispositif d'adaptation est doté d'un mécanisme de sélection du protocole aval. Ce mécanisme repose sur deux principes distincts :
- Le protocole aval est déterminé par l'utilisateur grâce à une interface de dialogue ce qui permet une configuration du pilote de périphérique 34 effectuée à l'aide du programme associé 36. Cette interface de dialogue est soit au niveau de l'équipement amont (un ou des écrans spécifiques) soit sur l'adaptateur (une série d'interrupteurs ou une roue codeuse par exemple). Le pilote de périphérique 34 peut alors télécharger le programme de conversion 15 dès son démarrage (qui est causé par la connexion de l'adaptateur).
- Un moyen de reconnaissance est intégré dans le câble aval 14. Ce cas s'applique lorsque l'invention met en oeuvre un câble aval 14 qui, dans la situation précédant l'invention, comprend déjà un moyen de reconnaissance naturel (carte PCMCIA, bouclage dans le câble, clef d'identification, ou autre moyen équivalent).
   Ce cas s'applique également lorsque de nouveaux câbles sont conçus spécifiquement pour l'invention (câbles aval courts). Le fonctionnement de la phase de téléchargement du programme de conversion 15 est alors plus complexe. On suppose alors que le câble de raccordement 14 comporte des moyens de reconnaissance intégrés qui sont détectables quand le câble 14 est connecté à l'interface aval 24 de l'adaptateur 20. Ils permettent à l'unité de traitement 21, grâce au programme pilote résident 16, de déterminer un identificateur 18 du protocole aval correspondant au câble 14. Chaque protocole aval différent est donc susceptible d'utiliser un câble 14 différent.
   L'identificateur 18 peut être soit complet 18b, c'est-à-dire qu'il peut déterminer complètement le protocole aval, soit partiel 18a, c'est-à-dire qu'il ne permet pas à lui seul d'identifier complètement le protocole aval. Un identificateur partiel 18a permet seulement de démarrer, entre l'adaptateur 20 et l'équipement aval 40, une communication suffisante pour faire un apprentissage complet du protocole aval. On peut ainsi, par exemple, identifier la version exacte du protocole aval, information trop évolutive pour être contenue dans l'identificateur partiel 18a lu sur le câble 14.

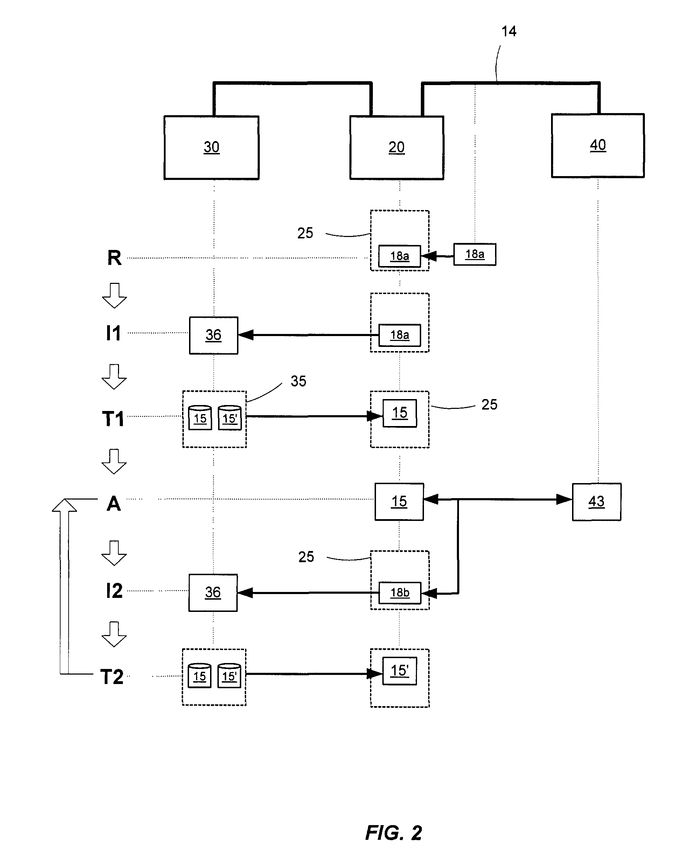

Le procédé de configuration du dispositif d'adaptation va maintenant être décrit, en référence à la figure 2.

Dans une étape préliminaire, appelée étape de reconnaissance R, l'adaptateur 20 détermine, à l'aide du programme pilote résident 16, un identificateur partiel 18a ou complet 18b d'un protocole aval à partir des moyens de reconnaissance d'un câble de raccordement aval 14 connecté à l'adaptateur 20. Cet identificateur est mémorisé dans la première mémoire 25 de l'adaptateur.

Au cours d'une première étape d'identification I1, le programme pilote résident 16 de l'adaptateur 20 initialise alors la communication avec l'équipement amont 30 selon le protocole amont et lui transmet l'identificateur partiel 18a ou complet 18b de protocole aval déterminé durant l'étape R. La transmission peut avoir lieu à l'initiative du programme pilote résident 16 de l'adaptateur 20 par transmission d'un événement vers l'équipement amont 30 si le protocole amont le permet, ou par consultation périodique à l'initiative du pilote de périphérique 34 s'exécutant dans l'équipement amont 30.

Ensuite, au cours d'une première étape de téléchargement T1, le programme de contrôle 36 de l'équipement amont 30 analyse l'identificateur partiel 18a ou complet 18b et sélectionne dans la zone de stockage 35 un premier programme de conversion 15 correspondant à l'identificateur 18a,18b pour télécharger ce programme de conversion dans la première mémoire 25 de l'adaptateur 20.

Si l'identificateur 18 de protocole aval était complet 18b, le procédé de configuration est alors terminé et une communication peut s'établir entre l'équipement amont 30 et l'équipement aval 40 à travers le programme de conversion 15 chargé dans l'adaptateur 20.

Si l'identificateur 18 de protocole aval était partiel 18a, le procédé de configuration se poursuit par une étape d'apprentissage A durant laquelle le programme de conversion 15 téléchargé durant l'étape T1 va initialiser une communication avec le pilote de protocole aval 43 de l'équipement aval 40 en vue de préciser complètement le protocole aval utilisé. Au cours de cette étape d'apprentissage A, le programme de conversion 15 peut par exemple essayer d'instituer une communication avec l'équipement aval 40 en émettant différentes requêtes conformes à différents types ou différentes versions de protocoles aval, puis de tester les éventuelles réponses de l'équipement aval 40 afin de déterminer le protocole aval réellement présent dans l'équipement aval 40. A l'issue de cette étape d'apprentissage, un identificateur complet 18b du protocole aval est identifié et est chargé dans la première mémoire 25.

Cet identificateur complet 18b est ensuite transmis, au cours d'une seconde étape d'identification 12, par le programme pilote résident 16 de l'adaptateur 20 vers l'équipement amont 30 selon le protocole amont.

Le programme de contrôle 36 de l'équipement amont 30 analyse l'identificateur 18b et sélectionne dans la zone de stockage 35 un second programme de conversion 15' correspondant à l'identificateur complet 18b de façon à télécharger ce programme de conversion dans la première mémoire 25 de l'adaptateur 20 durant une seconde étape de téléchargement T2. A la suite de cette étape T2, une communication peut normalement s'établir entre l'équipement amont 30 et l'équipement aval 40 à travers le programme de conversion 15' et le procédé de configuration est alors terminé.

Cependant, il est tout à fait envisageable qu'après la seconde étape de téléchargement T2, l'identificateur 18 ne soit toujours pas complet et qu'il soit donc nécessaire de reboucler le procédé de configuration vers une étape d'apprentissage A supplémentaire permettant de préciser encore le protocole aval (par exemple pour déterminer la version exacte du protocole aval utilisé). Il y aurait alors ensuite une autre étape I2 puis une autre étape T2.

Avantageusement, l'invention doit permettre de réutiliser certains câbles 14 standard existants, notamment ceux munis de liaison de rebouclage. Par exemple, à partir des moyens de reconnaissance d'un câble de raccordement aval 14 standard, l'adaptateur 20 est capable de déterminer un identificateur partiel 18a indiquant que le protocole aval s'appuie sur une liaison du type RS-485. Avec cette information envoyée à l'équipement amont 30, le programme de contrôle 36 est capable de choisir et de télécharger un premier programme de conversion 15 dans la première mémoire 25. Pour définir un identificateur complet 18b du protocole aval, ce programme de conversion 15 pourra alors envoyer successivement à l'équipement aval 40 différentes requêtes en utilisant une liaison de type RS-485, par exemple selon le protocole MODBUS, le protocole Uni-Telway ou autres, afin de tester celles qui seront effectivement comprises et qui donneront lieu à une réponse satisfaisante de l'équipement aval 40. Grâce à cette fonctionnalité, la nature mais aussi la version du protocole aval utilisé par l'équipement aval 40 peut être déterminée. Ceci permet au dispositif d'adaptation de pouvoir s'adapter à une très grande variété d'équipements aval avec le même équipement amont sous réserve que celui-ci stocke les programmes de conversion adéquats. En pratique, un même ordinateur de type PC sera ainsi en mesure de communiquer facilement avec des équipements d'automatisme récents ou anciens, de façon transparente pour un utilisateur, sans avoir à se préoccuper de la compatibilité entre l'interface aval de l'équipement d'automatisme (port série) et l'interface amont de l'ordinateur (par exemple port USB).

Lorsque le câble de raccordement aval 14 est au préalable raccordé à l'adaptateur 20, le procédé est démarré lors de la connexion de l'adaptateur 20 à l'équipement amont 30 ou sur demande de l'adaptateur 20. Lorsque l'adaptateur 20 est au préalable raccordé à l'équipement amont 30, le procédé est démarré lors de la connexion du câble de raccordement aval 14 à l'adaptateur 20.

A titre de variante, il existe d'autres moyens pour passer d'un identificateur partiel 18a à un identificateur complet 18b. Par exemple, on pourrait envisager une interface de dialogue opérateur, tels que des roues codeuses qui permettraient à un utilisateur de sélectionner lui-même le protocole aval. Dans certains cas également, un logiciel spécifique pourrait suffire dans l'équipement amont 30 pour déduire un identificateur complet 18b à partir d'un identificateur partiel 18a déterminé par les moyens de reconnaissance du câble de raccordement aval 14. Le programme de contrôle 36 serait alors en mesure de télécharger directement le programme de conversion 15' définitif.

Une autre variante est que le programme pilote résident 16 soit capable de modifier l'identificateur 18 avant de l'envoyer à l'équipement amont 30 de manière à ce que le programme de conversion 15 chargé durant une étape de téléchargement T1,T2 dépende de la version logicielle de l'adaptateur 20.

Il est bien entendu que l'on peut, sans sortir du cadre de l'invention, imaginer d'autres variantes et perfectionnements de détail et de même envisager l'emploi de moyens équivalents.

## Revendications

1. Dispositif d'adaptation programmable entre un protocole de communication amont supporté par un équipement amont (30) et au moins un protocole de communication aval supporté par un équipement d'automatisme aval (40), le dispositif comprenant un adaptateur (20) muni d'une unité de traitement (21) capable d'exécuter des instructions de programme, d'une interface amont (23) pouvant se connecter avec une interface amont (32) de l'équipement amont (30) et d'une interface aval (24) pouvant se connecter avec une interface aval (42) de l'équipement aval (40), **caractérisé par le fait que** :
• l'adaptateur (20) comprend une première mémoire (25) contenant un programme de conversion (15) entre le protocole amont et un protocole aval, téléchargeable à partir de l'équipement amont (30) et exécutable par l'unité de traitement (21) de l'adaptateur (20),
• l'adaptateur (20) comprend une seconde mémoire (26) non volatile contenant un programme pilote résident (16) exécutable par l'unité de traitement (21), permettant d'initialiser la communication avec l'équipement amont (30) selon le protocole de communication amont et de télécharger le programme de conversion (15) dans la première mémoire (25).

2. Dispositif d'adaptation selon la revendication 1, **caractérisé par le fait que** la première mémoire (25) de l'adaptateur (20) est une mémoire volatile.

3. Dispositif d'adaptation selon la revendication 2, **caractérisé par le fait que** la première mémoire (25) de l'adaptateur (20) contient une zone mémoire tampon (17) utilisée par le programme de conversion (15) pour s'adapter aux asynchronismes entre les protocoles amont et aval.

4. Dispositif d'adaptation selon la revendication 3, **caractérisé par le fait que** le programme de conversion (15) exécuté par l'unité de traitement (21) stocke dans la zone mémoire tampon (17) les messages reçus en provenance d'un équipement aval (40) avant de le transmettre vers l'équipement amont (30).

5. Dispositif d'adaptation selon la revendication 3, **caractérisé par le fait que** le programme de conversion (15) exécuté par l'unité de traitement (21) stocke dans la zone mémoire tampon (17) les messages reçus en provenance de l'équipement amont (30) avant de le transmettre vers un équipement aval (40).

6. Dispositif d'adaptation selon la revendication 1 comprenant un câble de raccordement aval (14) entre l'interface aval (24) de l'adaptateur (20) et l'interface aval (42) de l'équipement aval (40), **caractérisé par le fait que** le câble de raccordement aval (14) comporte des moyens de reconnaissance intégrés, détectables quand le câble (14) est connecté à l'interface aval (24) de l'adaptateur (20), permettant à l'unité de traitement (21) de l'adaptateur (20) de déterminer un identificateur complet (18b) ou partiel (18a) du protocole aval grâce au programme pilote résident (16).

7. Dispositif d'adaptation selon la revendication 6, **caractérisé par le fait que** l'identificateur complet (18b) ou partiel (18a) de protocole aval est mémorisé dans la première mémoire (25) de l'adaptateur (20).

8. Dispositif d'adaptation selon la revendication 1, **caractérisé par le fait que** le dispositif comprend également dans l'équipement amont (30) une zone de stockage (35) permettant de mémoriser un ou plusieurs programmes de conversion (15,15') entre le protocole amont et un protocole aval, susceptibles d'être téléchargés dans la première mémoire (25) de l'adaptateur (20).

9. Dispositif d'adaptation selon la revendication 8, **caractérisé par le fait que** l'équipement amont (30) comprend au moins un pilote de protocole aval (33) et au moins un pilote de périphérique (34) supportant une interface de communication série, de façon à ce que le pilote de protocole aval (33) communique avec le pilote de périphérique (34) au travers de cette interface de communication série.

10. Dispositif d'adaptation selon la revendication 9, **caractérisé par le fait que**, en fonction de la criticité des messages à transmettre, le pilote de périphérique (34) de l'équipement amont (30) utilise des canaux de communication différents pour échanger des messages avec le programme pilote résident (16).

11. Dispositif d'adaptation selon la revendication 1, **caractérisé par le fait que** le protocole de communication amont est le protocole USB.

12. Dispositif d'adaptation selon la revendication 11, **caractérisé par le fait que** l'adaptateur (20) est alimenté par l'interface USB de l'équipement amont (30).

13. Dispositif d'adaptation selon la revendication 1, **caractérisé par le fait que** le protocole de communication amont est le protocole BLUETOOTH.

14. Dispositif d'adaptation selon la revendication 1, **caractérisé par le fait que** le protocole de communication amont est un protocole conforme au standard IEEE 1394-1995.

15. Dispositif d'adaptation selon la revendication 1, **caractérisé par le fait que** le protocole de communication aval est un des protocoles Modbus, Modbus+, Uni-telway ou tout protocole dont la couche physique est de type RS-232, RS-485, RS-422 ou boucle de courant.

16. Dispositif d'adaptation selon la revendication 1, **caractérisé par le fait que** le protocole de communication aval est un protocole basé sur les standards Ethernet et TCP/IP.

17. Dispositif d'adaptation selon la revendication 1, **caractérisé par le fait que** le protocole de communication aval est sélectionné parmi un groupe constitué des protocoles FIP, CAN, CANopen, Interbus-S, DeviceNet.

18. Dispositif d'adaptation selon la revendication 1, **caractérisé par le fait que** le protocole de communication aval est un protocole de communication basé sur le protocole USB.

19. Procédé de configuration mis en oeuvre dans un dispositif d'adaptation selon l'une des revendications précédentes, **caractérisé par le fait que** le procédé comporte
• une étape de reconnaissance (R) dans laquelle l'adaptateur (20) détermine et mémorise un identificateur partiel (18a) ou complet (18b) d'un protocole aval à partir des moyens de reconnaissance du câble de raccordement aval (14) connecté à l'adaptateur (20),
• une première étape d'identification (11) dans laquelle l'adaptateur (20) communique avec l'équipement amont (30) selon le protocole de communication amont pour lui transmettre l'identificateur partiel (18a) ou complet (18b) de protocole aval,
• une première étape de téléchargement (T1) dans laquelle l'équipement amont (30) télécharge dans l'adaptateur (20) un premier programme de conversion (15) entre protocole amont et protocole aval, correspondant à l'identificateur partiel (18a) ou complet (18b) du protocole aval transmis.

20. Procédé de configuration selon la revendication 19, **caractérisé par le fait que**, lorsque l'identificateur de protocole aval transmis à l'équipement amont (30) durant la première étape d'identification (I1) est un identificateur partiel (18a), le procédé comporte les étapes complémentaires suivantes :
• une étape d'apprentissage (A) dans laquelle l'adaptateur (20) communique avec l'équipement aval (40) à l'aide du premier programme de conversion (15) téléchargé durant la première étape de téléchargement (T1), afin de définir et mémoriser un identificateur complet (18b) du protocole aval,
• une seconde étape d'identification (12) dans laquelle l'adaptateur (20) communique avec l'équipement amont (30) pour lui transmettre cet identificateur complet (18b),
• une seconde étape de téléchargement (T2) dans laquelle l'équipement amont (30) télécharge dans l'adaptateur (20) un second programme de conversion (15') entre protocole amont et protocole aval, correspondant à l'identificateur complet (18b) du protocole aval.

21. Procédé de configuration selon la revendication 19, **caractérisé par le fait que**, lorsque le câble de raccordement aval (14) est au préalable raccordé à l'adaptateur (20), le procédé est démarré lors de la connexion de l'adaptateur (20) à l'équipement amont (30) ou sur demande de l'adaptateur (20).

22. Procédé de configuration selon la revendication 19, **caractérisé par le fait que**, lorsque l'adaptateur (20) est au préalable raccordé à l'équipement amont (30), le procédé est démarré lors de la connexion du câble de raccordement aval (14) à l'adaptateur (20).
